# EUROPEAN PATENT APPLICATION

(11) **EP 2 258 663 A1**
(43) Date of publication of application: **08.12.2010**
(21) Application number: 08736742.1
(22) Date of filing: 19.03.2008
(51) Int. Cl.: C02F 3/12

(54) **GREY WATER REGENERATION SYSTEM**

(71) Applicant: Hbio Reto Xxi, S.l., 48009 Bilbao (vizcaya) (ES)
(72) Inventor: RETOLAZA GAVIÑA, Gorka, E-48009 Bilbao (vizcaya) (ES); RETOLAZA GAVIÑA, Miguel, E-48009 Bilbao (vizcaya) (ES); RETOLAZA GAVIÑA, Jone, E-48009 Bilbao (vizcaya) (ES); RETOLAZA VILLACHICA, Juan Miguel, E-48009 Bilbao (vizcaya) (ES); GAVIÑA SANTAMARIA, Begoña, E-48009 Bilbao (vizcaya) (ES); LÓPEZ MORGAECHEVARRÍA, Joseba Iñaki, E-48007 Bilbao (vizcaya) (ES); ETXEBARRÍA, Javier, E-48170 Zamudio (vizcaya) (ES)
(74) Representative: Ezcurra Zufia, Maria Antonia
(86) International application number: PCT/ES2008/070055
(87) International publication number: WO 2009/115625

(57) **Abstract**

The object of this invention is a grey water regeneration system for its subsequent reuse which guarantees the quality of the purified water, disposing of sensors which fully control the process by means of an automaton programmed so that if it detects any problem in the system, the water can be evacuated to the general collector (5), and comprises a primary receptor tank (1) of the grey water that gathers to then supply it to the purification system, a secondary tank (11) wherein a biological purification takes place by means of activated sludge which comprise an aerator (14), a membrane (15) and a suction pump (31), and a tertiary tank (19) wherein a disinfection takes place by means of chloride additivation, wherein all of the tanks are connected to the general collector (5).

## Description

### OBJECT OF THE INVENTION

The object of the present invention is a grey water regeneration system which guarantees the quality of the water obtained for its subsequent reuse.

For this end, the system has sensors which fully control the process by means of a Pogrammable Logic Controller (PLC) that is designed to monitor, in real time, the operation in all sequential processes of each of the different devices and reservoirs of the treatment system of the invention.

The PLC is used to control and adjust the operation of the system through sensors. The system comprises at least pH sensors, suspended solid sensors, turbidity sensors, residual chlorine sensors, tank filling level sensors, level sensors for the dispensers and pressure sensors. The PLC reports these collected data to a central database, so that the control can be performed remotely.

Data is sent to the central database via Internet, GPRS or GSM.

The grey water regeneration system of the present invention ensures that the quality of the obtained purified water is the adequate thanks to the fact that all devices are controlled by a PLC, so that in the case that any malfunction is detected in the system, the PLC acts accordingly solving this problem.

The grey water regeneration system of the present invention ensures that the supply of the purified water has a high enough quality to be reused, because if the PLC detects any malfunction during the measurement, it acts in a way to solve the detected problem.

The grey water regeneration system fully controlled by a PLC object of the invention mainly comprises four tanks.

A primary collection tank that receives the grey water to then supply it to the purification system and which comprises a filter at the inflow; a secondary tank, wherein a biological purification takes place by means of activated sludge, which comprises a suction pump and a membrane, and a tertiary tank where a chlorine disinfection takes place, wherein each of the tanks is connected to the general collector.

### BACKGROUND OF THE INVENTION

The world's water resources are limited and, geographically, their availability is not evenly distributed. Only 1% of the total existing water is available fresh water and therefore it can be used for human consumption.

Water reuse presents itself as an appropriate alternative.

There are preceding grey water reuse systems, such as the patent with publication number ES2281262 which discloses a system for the desalination and recycling of oily water and liquid waste. This system uses no filters, membranes or chemicals to produce pure water, and energy. This system consists of a closed circuit machine, through which the waste water is introduced, subjecting it to an evaporation process, recovering the concentrated material (not evaporated), and producing clean water and energy.

There are also pre-existing waste water treatment systems, as described in the patent W02008015350 which discloses a method and a device for purifying both urban and industrial waste water. The method consists of a process for biologically treating urban or industrial waste water, during which the organic matter contained in the water is decomposed by microorganisms, generating activated sludge. It also consists of a decanting process, in which all or part of the sludge at the end of this stage is exposed to hydrogen peroxide.

The most restrictive factor for the reuse of treated water is the quality of the regenerated water.

Legislation on water reuse is very restrictive in terms of setting the minimum requirements that treated water must meet to be reused.

Thus, the invention here presented beats the previous inventions in that the grey water regeneration system object of the invention is a purification system that ensures that the quality of the water delivered for the different uses of this treated water is optimal.

The grey water regeneration system of the present invention ensures the quality of the resulting purified water by means of an integrated control system because it combines the existing purification systems with the best technology available giving full guarantee to the quality of treated water.

Thus, the system is controlled by a PLC which monitors the operation of the system using sensors that detect the presence of suspended solids, turbidity, pH and using filling level sensors for each different tank...etc and it also adjusts the various devices, including pumps, valves, dispensing pumps or any other system device.

The way to ensure that the quality of the purified water to be served to different uses demanding water for reuse is adequate is achieved because all the devices are controlled by the PLC, so that in the case that any problem is detected in the system, the water can evacuate to the general collector.

Furthermore, the present invention has other advantages: the generated organic load is minimal and easily degradable and no sludge or residue requiring authorized measures is generated and besides it requires less operating time and simple installations.

### SUMMARY OF THE INVENTION

The grey water regeneration system object of this invention is a grey water purification system that ensures a resulting high quality purified water for reuse.

For this, the system includes sensors that fully monitor the operation of the system by means of a PLC that is designed to monitor in real time, the operation of the system at all sequential processes ocurring in each of the tanks of the purification system object of this invention.

The grey water regeneration system object of the present invention ensures that the quality of the purified water delivered for the different uses of this treated water is the adequate thanks to the fact that all devices are controlled by a PLC, so that in the case that a malfunction is detected in the system, the PLC acts accordingly solving this problem.

The PLC controls the operation of the system through sensors that include pH sensors, suspended solid sensors, turbidity sensors, residual chlorine sensors, tank filling level sensors, level sensors for the dispensing devices and pressure sensors.

The PLC also monitors all the devices in the system. These devices are controlled by the PLC are mainly valves, solenoid valves and pumps within the system.

These data collected by the PLC is reported to a central database, so that the monitoring can be performed remotely.

Data is sent to the central database via Internet, GPRS or GSM, and can thus the system can be controlled remotely.

The grey water regenerating system of the present invention ensures that the supply of purified water has a high enough quality to be reused, because if the PLC detects any malfunction during the measurement, it will adapt to solve the detected problem.

So, it is because of the PLC that the system is fully controlled in real time throughout the whole process, allowing a remote management of the installation by means of an alarm system which connects to the central database.

This greatly facilitates the maintenance of the system, and it also ensures that the quality of the water is adequate for reuse.

The term "grey water" of the present specification is used to refer to the water from the drains of tubs, showers, washbasins, dishwashers and washing machines.

The water regeneration system of the present invention is intended mainly for houses, apartment buildings and housing developments or condominium housing units.

Thus, the system can be used as a solution for water reuse in houses and apartment buildings where the grey water regeneration system of the present invention will be installed preferably in basements, may yet be installed in any other place required by the builder.

Specially, when the system is used as a solution for water reuse in housing developments and condominiums, the system can be installed underground.

The grey water regeneration system fully controlled by a PLC comprises the following elements:

A grey water primary collection tank that receives water to then gradually supply it to the purification system.

In an embodiment of the invention, before the primary tank inlet, there is a pH indicator device. In the case that the grey water has a pH that falls out the range 4-9.5, the water is disposed to a general collector and the purification process will not take place.

So, the primary device consists of, in an embodiment of the invention, an overflow drain which is directly connected to the general collector and will eliminate all substances with lower density than water, i.e. substances with density inferior to 1 g/cm³, and will also evacuate waste water which is not within the range of pH 4-9.5.

This monitoring prevents the water containing abrasive and disinfectant products, bleach or any other cleaning product, pharmaceuticals with biocidal properties or any other chemical product that can endager the smooth functioning of the system, from being disposed to the general collector, as if it continued with the purification treatment, the water obtained for reuse would not meet the established legal requirements.

This is so because these products destruct the sludge that enables the biological treatment taking place in the secondary tank, which will be explained later in this specification.

This overflow drain also disposes all the water that exceeds the storage capacity of the tank to the general collector.

The primary tank comprises at least one filter, preferably a mesh filter, at the inflow and optionally another filter at the outflow and also optionally, a blender that homogenizes the mixture.

This primary tank has also a level sensor that informs the PLC of the filling level.

If the PLC detects a malfunction before the water goes into the regeneration system, the water can be discharged through a solenoid valve to the general collector.

This primary tank includes, in a first embodiment of the invention, an outlet pipe that has a manual valve followed by a solenoid valve which is connected to the collector, so that, if the PLC detects any malfunction, the water is discharged into the general collector.

A second pipe branches off from the primary tank outlet pipe, which communicates with a pump and, if conditions are optimal, the water is drawn by the pump into a secondary tank.

The primary tank pump provides water to the secondary tank. Before the water goes into the secondary tank, nitrogen and phosphorus are added to make up for the lack of nutrients in the water that the biological reaction may cause.

Nitrogen and phosphorus are added by means of the difference in pressure of the communicating ducts, or by using solenoid valves, metering pumps or dispensers.

In another second embodiment of the invention, the primary tank is only connected to the general collector through the overflow drain that directs excess water and any substance that has lower density than water.

The primary tank, in this embodiment of the invention, is just above a secondary tank and the water is delivered from the first to the second tank by gravity force, with the help of a floating valve within the secondary tank.

Biological and refining treatment takes place in this secondary tank. For this purpose, the secondary tank comprises at least one aerator and one suction pump that generate air currents so the water is infused with oxygen and is impelled through at least one membrane. This one can be a micro filtration, nanofiltration or ultrafiltration membrane.

The secondary tank outlet pipe comprises a manual valve followed by a solenoid valve which is controlled by the PLC. This outlet is connected to the general collector so that the water can be discharged to waste.

In the secondary tank, the water is passed through at least one membrane by means of the suction pump and it is pushed up into an outlet pipe that connects the secondary and the tertiary tank.

The tertiary tank comprises a chlorine dispenser as disinfection system. Chlorine can be dispensed by means of difference in section of the communicating ducts, or through solenoid valves, metering pumps or dispensers placed before the inlet of the tank. Chlorine can also be added in the tertiary tank itself.

The tertiary tank outlet pipe comprises a manual valve followed by a solenoid valve controlled by the PLC. This outlet is connected to a drain pipe that discharges water to the general collector.

The tertiary tank comprises a second outlet that connects the different uses of the treated water.

In this second outlet of the tertiary tank there is a solenoid valve diverting water whose quality will be measured by a device comprising at least pH sensors, suspended solid sensors, turbidity sensors and residual chlorine sensors.
The upright pipe that delivers water for the different uses of this treated water includes a pressure sensor that detects the need for water in the upright pipe and if the quality of the purified water is the adequate and there is water in the tertiary tank, water is drawn from the tertiary tank by means of a pump.

In the event that no water is available or the quality of the water is not optimal, or in the case that the PLC detects a malfunction, the water is supplied from the ordinary potable water network through a valve that selects the water flow.

Optionally, the grey water regeneration system may incorporate a fourth tank for rainwater, which comprises a filter, preferably a sand filter that connects directly to the tertiary tank and a further chlorine dispenser.

In an embodiment of the invention, the treated water that will be reused is tinted so that it can be distinguished from drinking water.

For this purpose, the system includes a dye dispenser.

The system comprises level sensors in each of the tanks.

To sum up, the present invention describes a grey water regeneration system which is fully controlled by a PLC, comprising a grey water primary collection tank, a secondary tank including at least an aerator, a membrane and a suction pump, and a tertiary tank in which a chlorination takes place, wherein the primary, the secondary and tertiary tanks are all connected to the general collector.

### BRIEF DESCRIPTION OF THE DRAWINGS

The present specification is additionally described by a set of illustrative drawings including, but not limited to the preferred embodiment of the invention.
Figure 1 is a first embodiment of the grey water regeneration system of the present invention.
Figure 2 is a second embodiment of the grey water regeneration system of the present invention.

### DETAILED DESCRIPTION OF THE INVENTION

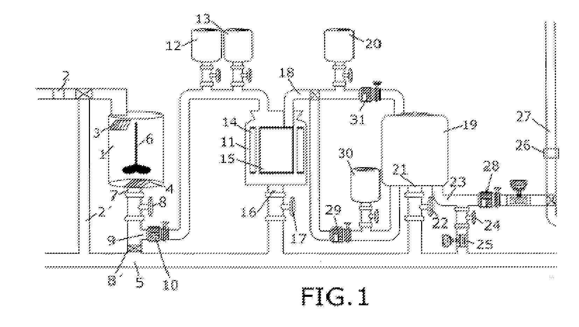

Figure 1 is a first preferred embodiment of the invention.

In this preferred embodiment, the grey water regeneration system comprises three tanks:

A grey water primary collection tank (1) that receives water to then gradually supply it to the purification system.

In this preferred embodiment, the grey water regeneration system has a pH sensor (2), before the inlet of the primary tank (1). In the case that the grey water has a pH that falls within the range 4-9.5, the water is diverted to a general collector (5) and the purification process will not take place.

In this preferred embodiment, the primary tank (1) has a mesh filter (3) at the inlet and another mesh filter (4) at the outlet and a blender device, which in this embodiment is a blade, that homogenizes the mixture(6).

So, the primary device consists of, in this embodiment of the invention, an overflow drain (2') which is directly connected to the general collector (5) and will eliminate all substances with lower density than water, i.e. substances with density inferior to 1 g/cm3, and will also evacuate waste water which is not within the range of pH 4-9.5.

Additionally, the overflow drain (2 ') can evacuate the excess water from the primary tank (1).

This primary tank (1) includes, in a first embodiment of the invention, an outlet pipe (7) that consists of manual valve (8') followed by a solenoid valve (8') which is connected to the collector (5), so that if the PLC detects a malfunction, the water is discharged into the general collector.

From this outlet pipe (7) of the primary tank (1) a second pipe (9) comes out, which communicates with a pump (10) that impels water into a secondary tank (11).

The primary tank pump (1) provides water to the secondary tank (11). Before the water goes into the secondary tank (11), nitrogen and phosphorus are added to make up for the lack of nutrients in the water that the biological reaction may cause. In this embodiment, nitrogen and phosphorous are added using dispensers which are coupled to the second outlet pipe (9) of the primary tank (1).

So, before the inlet of the secondary tank, there is a nitrogen dispenser (12) and a phosphorus dispenser (13).

In the secondary tank (11) a biological and refining treatment takes place. To this purpose, the secondary tank (11) of this preferred embodiment comprises at least one aerator (14) and so that the water is infused with oxygen and is impelled, with the help of a suction pump (31), through a membrane (15), which in this embodiment is an ultrafiltration membrane.

The water passes through the membrane (15) with the help of a suction pump (31).

The outlet pipe (16) of the secondary tank (11) has a manual valve (17) followed by a solenoid valve which is controlled by the PLC. This outlet is connected to the collector (5) so the water can be discharged to the general collector.

In the secondary tank, water is passed through at least one membrane (15) and is directed with the help of a suction pump (31) to an outlet pipe (18) which connects the secondary tank (11) with the tertiary tank (19).

Before the inlet of the tertiary tank (19), there is a chlorine dispenser (20) as disinfection system.

The outlet pipe (21) of the tertiary tank has a manual valve (22) followed by a solenoid valve which is controlled by the PLC. This outlet pipe discharges water to the general collector (5).

The tertiary tank (19) has a second outlet pipe (23) that connects the different uses of the treated water.

In this second outlet (23) of the tertiary tank (19) there is a manual valve (24) followed by a solenoid valve which diverts water so that the quality of the water can be measured by a device (25), which in this embodiment comprises pH sensors, suspended solid sensors, turbidity sensors and residual chlorine sensors.

The second outlet (23) of the tertiary tank (19) comprises a pressure sensor (26) that detects the need for water in the upright pipe (27) that delivers water for the different uses of the treated water and if the quality of the purified water is correct and there is water in the tertiary tank (19) the water is drawn from the tertiary tank (19) by a pump (28).

In the event that no water is available or that the quality of the water is not optimal, the water is supplied from the ordinary drinking water network.

In this preferred embodiment, the invention includes a membrane self-cleaning system connecting the tertiary tank (19) to the secondary tank (11) by means of a pump (29). This backwash lasts approximately 15 minutes.

After 30 minutes of water flowing through the membranes (12), the suction is stopped and the flow of water is reversed so that the force of the water tosses the particles blocking the membranes. For maximum effectiveness, chlorine is added to the water by a chlorine dispenser.

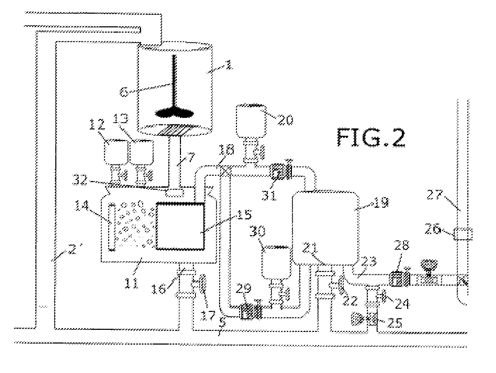

Figure 2 is a second preferred embodiment of the invention.

In this preferred embodiment, the grey water regeneration system comprises three tanks.

This preferred embodiment is characterized by a primary tank (1) placed above a secondary tank (11).

A grey water primary collection tank (1) that receives water to then gradually supply it to the purification system.

In this preferred embodiment, the primary tank (1) comprises a blender that homogenizes the mixture (6).

The primary device has, in this embodiment of the invention, an overflow drain (2 ') which is directly connected to the general collector (5).

This primary tank (1) has an outlet pipe (7) that connects to the secondary tank (11). This secondary tank (11) is gravity fed. The opening/close is allowed by means of a float or a solenoid valve (32) within the secondary tank (11).

Before the water goes into the secondary tank (11), nitrogen and phosphorus are added to make up for the lack of nutrients in the water that the biological reaction may cause.

In this embodiment, the nitrogen and phosphorous are added using dispensers which are located above the secondary tank (11).

So, in the upper part of the secondary tank (11), there is a nitrogen dispenser (12) and a phosphorus dispenser (13).

In the secondary tank (11) a biological and refining treatment takes place. To this purpose, the secondary tank (11) of this preferred embodiment comprises at least one aerator (14) that blows air that generate air currents that cause the water to oxygenate and pass through a membrane (15), which in this embodiment is an ultrafiltration membrane.

The outlet pipe (16) of the secondary tank (11) has a manual valve (17) followed by a solenoid valve which is controlled by the PLC. This outlet (16) is connected to the collector (5) so the water can be discharged to the general collector.

In the secondary tank (11), water is passed through at least one membrane (15) and is impelled with the help of a suction pump (31) to an outlet pipe (18) which connects the secondary tank (11) with the tertiary tank (19).

Before the inlet of the tertiary tank (19), there is a chlorine dispenser (20) as disinfection system.

The outlet pipe (21) of the tertiary tank has a manual valve (22) followed by a solenoid valve which is controlled by the PLC. This output is connected to a pipe that delivers water to the collector (5).

The tertiary tank (19) has a second outlet (23) that provides water for the different uses of the treated water.

In this second outlet (23) of the tertiary tank (16) there is a solenoid valve (24) which diverts water so that the quality of the water can be measured by a device (25), which in this embodiment comprises pH sensors, suspended solid sensors, turbidity sensors and residual chlorine sensors.
The upright pipe (27) comprises a pressure sensor (26) that detects the need for water in the upright pipe (27) that delivers water for the different uses of the treated water and if the quality of the purified water is correct and there is water in the tertiary tank (19) the water is drawn from the tertiary tank (19) by a pump (28).

In the event that no water is available or that the quality of the water is not optimal, the water is supplied from the ordinary drinking water network.

Variations in the materials, shape, size and arrangements of the components, which are described in non-limiting basis, do not alter the essence of this invention, which is sufficient for an expert to carry out the procedure.

## Claims

1. Grey water regeneration system **characterized in that** it is fully controlled by a PLC, including
a primary collection tank (1) that receives the grey water,
a secondary tank (11) comprising at least one aerator (14), a membrane (15) and a suction pump (31),
a tertiary tank (19) where a chlorination takes place,
wherein the primary tank (1) the secondary tank (11) and the tertiary tank (19) are connected to the general collector (5).

2. Grey water regeneration system according to claim 1, **characterized by** comprising a fourth collection tank for rain water, which is directly connected to the tertiary tank (19) and includes a filter.

3. Grey water regeneration system according to claims 1 and 2, **characterized by** a PLC that reports the data to a central controller via Internet, GPRS or via GSM so the system can be controlled remotely.

4. Grey water regeneration system according to claim 1 and 2, **characterized in that** the primary tank (1) is connected to the general collector (5) through an overflow drain(2').

5. Grey water regeneration system according to claim 1 and 2, **characterized in that** the primary tank (1), secondary tank (11) and tertiary tank (19) are connected each of them to the general collector (5) through a valve (8, 17, 22).

6. Grey water regeneration system according to claim 5, **characterized in that** the valve is a manual valve followed by a solenoid.

7. Grey water regeneration system according to claim 1 and 2, **characterized in that** the filter (15) is a micro filtration, nano filtration or ultrafiltration membrane.

8. Grey water regeneration system, according to claims 1 and 2 **characterized in that** chlorination is done by means of a difference in section of the communicating ducts, or through valves, metering pumps or dispensers (20).

9. Grey water regeneration system, according to previous claims, **characterized in that** the primary tank (1) comprises a pH sensor (2) before the inlet, a filter at the inlet and another filter at the outlet of the tank (1), a blender system (6), a level sensor, an outflow drain (2') which is connected to the general collector (5); the secondary tank (11) comprises a nitrogen and a phosphorus dispenser and the tertiary tank comprises a second outlet (23) with a valve (24) which diverts water towards a device (25) that measures the quality of the water and which is connected to the collector (5). This second outlet (23) connects to the upright pipe (27) which delivers water for the different uses of the purified water and comprises a pressure sensor (26).

10. Grey water regeneration system, according to claim 9, **characterized in that** the addition of nitrogen and phosphorus is done through a difference in pressure in the communicating ducts, through valves or through metering pumps or dispensers (12, 13).

11. Grey water regeneration system, according to claim 9, **characterized in that** the system comprises a membrane self-cleaning system connecting the tertiary tank (19) to the secondary tank (11) by means of a pump (29).

12. Grey water regeneration system, according to claim 9, **characterized in that** the system comprises a dye dispenser.

13. Grey water regeneration system, according to claim 9, **characterized in that** the primary tank (1), the secondary tank (11) and the tertiary tank (19) each include at least one level sensor.
